Europäisches Patentamt

European Patent Office

Office européen des brevets

(19)

(11) Publication number: **0 287 667**
**A1**

# EUROPEAN PATENT APPLICATION

published in accordance with Art. 158(3) EPC

(21) Application number: 87906455.8

(22) Date of filing: 30.09.87

Data of the international application taken as a basis:

(86) International application number:
PCT/JP87/00726

(87) International publication number:
WO88/02304 (07.04.88 88/08)

(51) Int. Cl.³: **B 29 C 55/18**
**B 29 C 43/26**

(30) Priority: 30.09.86 JP 229546/86
30.09.86 JP 229547/86
26.02.87 JP 41419/87

(43) Date of publication of application:
26.10.88 Bulletin 88/43

(84) Designated Contracting States:
DE FR GB IT

(71) Applicant: Nippon Steel Corporation
6-3, 2-chome, Ohte-machi
Chiyoda-ku Tokyo 100(JP)

(72) Inventor: KIKUMA, Toshio Nippon Steel Corp. R&D
Lab.-III
1-1-1, Edamitsu, Yahatahigashi-ku
Kitakyushu-shi, Fukuoka 805(JP)

(72) Inventor: HIGASHIDA, Yasuhiro Nippon Steel Corp. R&D
Lab.III
1-1-1, Edamitsu, Yahatahigashi-ku
Kitakyushu-shi, Fukuoka 805(JP)

(72) Inventor: KAWANAMI, Takao Nippon Steel Corp. R&D
Lab.-III
1-1-1, Edamitsu, Yahatahigashi-ku
Kitakkyushu-shi, Fukuoka 805(JP)

(74) Representative: Arthur, Bryan Edward et al,
Withers & Rogers 4 Dyer's Buildings Holborn
London EC1N 2JT(GB)

(54) STRETCH-REINFORCED POLYMER MATERIAL SHEET AND METHOD OF PRODUCING THE SAME.

(57) A stretch-reinforced polymer sheet obtained by stretching and orienting the molecular chains of a polymer material at a predetermined ratio in a direction at right angles, or substantially at right angles, with each other, having a birefringence factor of zero or near zero and low in-plane anisotropy and suitable for a structural member or a functional member.

Fig. 4

DESCRIPTION

STRETCHED REINFORCED POLYMER SHEET AND
PROCESS FOR PREPARATION THEREOF

TECHNICAL FIELD

The present invention relates to a biaxially stretched reinforced polymer sheet (or place or board) which is used as a construction member, a functional member or the like, wherein the molecular chain is stretched and oriented in the plasticized state in two directions substantially orthogonal to each other, the difference of the birefringence between the two directions being within 5.0, the strength level being high and the in-plane anisotropy being low, and a process for the preparation thereof.

BACKGROUND ART

An extruded sheet of a crystalline polymer such as polypropylene or polyethylene usually has a tensile strength of about 3 $kgf/mm^2$ and a Young's modulus of about 100 $kgf/mm^2$, and does not completely satisfy the practical strength or rigidity requirements for a construction material.

Generally speaking, a polymeric material is advantageous in that it has a weight light, resting does not occur, the electrical insulating property or heat insulating property is excellent, the acid resistance or alkali resistance is high and the processability is good. Nevertheless, the tensile strength, elastic modulus (Young's modulus), hardness, heat resistance and the like, the polymer are inferior to those of a metallic material

It is considered that if a high strength and high elastic modulus can be imparted to a polymer utilization of the polymer will greatly increase in the fields of vehicles, airplanes, industrial machinery, electonics, information engineering, the chemical industry and the like.

Various improvements have been attempted, to meet this demand, and as an example of such a technical means, there can be mentioned a technique disclosed in the report entitled "Influences of Rolling Temperature in Rolling of Polypropylene Sheets", published in "Journal of The Japan Society for Technology of Plasticity", Vol. 25, No. 278 (March 1984), pages 233 to 237, which teaches that, if a crystalline polymer is stretched at a temperature near to the melting point thereof, linear molecules of crystalline portions are elongated and oriented and thus the strength is increased.

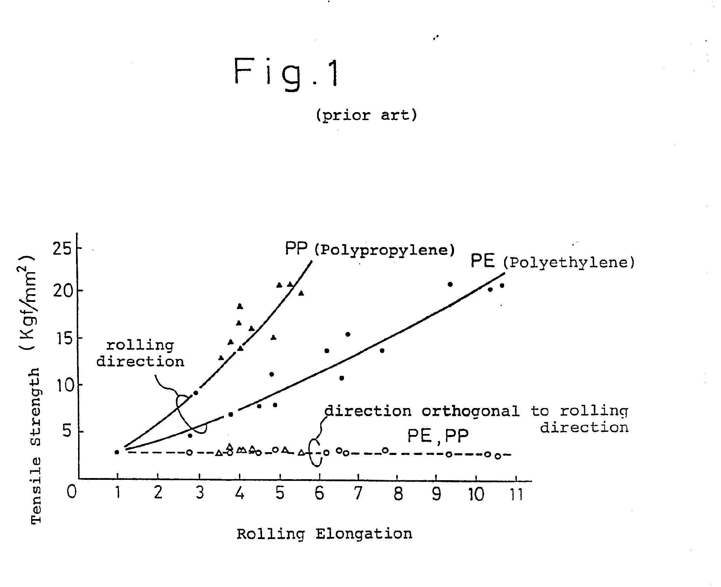

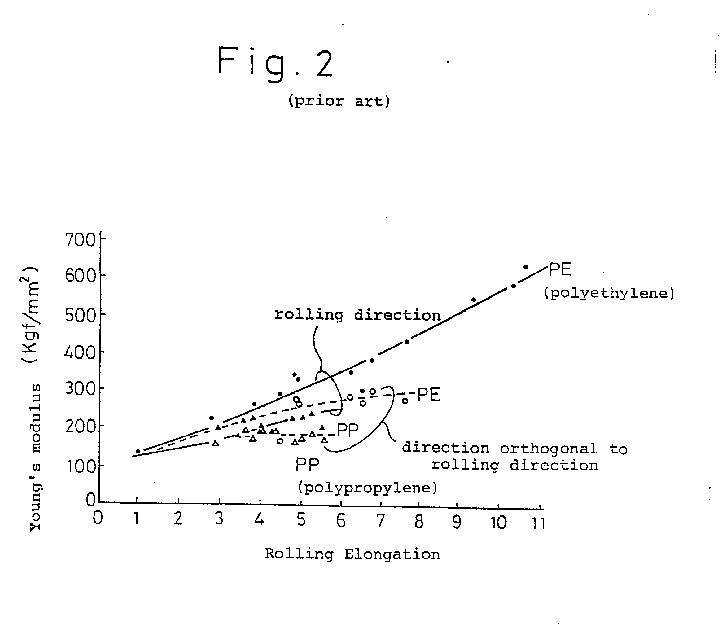

Experimental results obtained by the present inventors are shown in Figs. 1 and 2.

From these experimental results, it can be seen that, if a polymer is stretch by rolling, the tensile strength and Young's modulus in the stretching direction are increased. But, as is apparent from Figs. 1 and 2, the tensile strength and Young's modulus in the direction orthogonal to the drawing direction are not improved but remain at the same levels as those of the starting material.

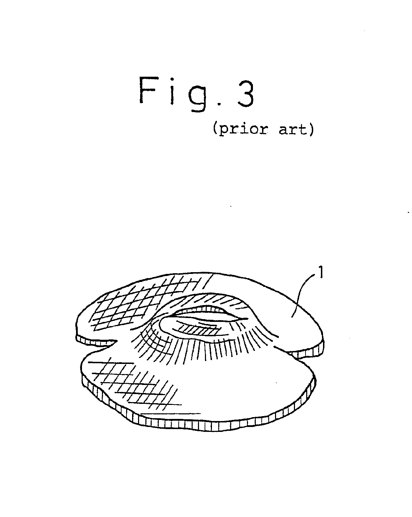

Accordingly, the polymer stretched in one direction has a high in-plane anisotropy in either the tensile strength or the Young's modulus, and if the sheet material is used as a construction member, the plate material is not suitable for a main molding operation for obtaining a construction member, such as press working. For example, if a uniaxially stretched sheet (the tensile strength $\sigma_L$ in the rolling direction is 20 kgf/mm$^2$ and the tensile strength $\sigma_C$ in the direction orthogonal to the rolling direction is 3 kgf/mm$^2$) is pressed to form a cylindrical article having a diameter of 70 mm, a product as shown in Fig. 3 is obtained. Namely, since this pressed article 1 has a high strength anisotropy, breaking occur at the part corresponding to the shoulder of a punch, in the pressing step, or since the drawn portion having an increased strength is pulled into the side wall of a cup, wrinkles are formed in the flange portion or the flange width is decreased.

This phenomenon has already been clarified in the press working of thin steel sheets, and it has been explained that, in case of thin steel sheets, this phenomenon is due to the anisotropy of the plasticity (Lankford value) caused by the aggregation texture of crystal grains and the in-plane anisotopy of the strength. Also, in the case of polymer sheets, the anisotropy of the strength is not preferred because it results in a reduction of the formability, the formation of wrinkles, and inaccuracy in the dimensions of the flange portion.

DISCLOSURE OF THE INVENTION

An object of the present invention is to solve the above-mentioned problem and provide a biaxially stretched reinforced polymer sheet having a high tensile strength and Young's modulus and a reduced in-plane anisotropy of these characteristics, and suitable for press working and a process for the preparation thereof.

More specifically, in accordance with the present invention, there is provided a biaxially stretched reinforced polymer sheet obtained by stretching and orienting the molecular chain of a polymer in the plasticized state in two directions orthogonal or substantially orthogonal to each other, wherein the birefringence is zero or in the vicinity thereof.

Furthermore, in accordance with the present invention, there is provided a process for the preparation of a biaxially stretched reinforced polymer sheet, which comprises rolling a heated, kneaded and extruded polymer sheet in the plasticized state in one direction at a draw ratio of from 1.5 to 10, and then rolling the rolling the polymeric material in another direction orthogonal or substantially orthogonal to the one direction at a rolling elongation ratio not high than 2.

Note, rolling in one direction and rolling in another direction can be accomplished by a method in which rolling in one direction is carried out, the polymer is once cooled and heated again and rolling in another direction is carried out, or a method in which rolling in one direction is carried out and rolling in another direction is carried out without lowering the temperature of the material to a point close to room temperature.

BRIEF DESCRIPTION OF THE DRAWINGS

The present invention will not be described in detail with reference to the accompanying drawings.

Figure a graph illustrating the relationship between the rolling elongation and tensile strength in an uniaxially rolled polymer sheet;

Fig. 2 is a graph illustrating the relationship between the rolling elongation and Young's modulus in an uniaxially rolled polymer sheet.

Fig. 3 is a perspective view illustrating breaking, flange wrinkles and an uneven flange width in a cylindrical article having a diameter of 70 mm, which has been obtained by press-working an uniaxially rolled polyethylene sheet;

Fig. 4 is a diagram illustrating the rolling directions adopted when a polymer sheet 2 is biaxially rolled according to the present invention;

Figs. 5(A), 5(B) and 5(C) are graphs illustrating changes of the birefringence $\Delta n$ in biaxial rolling;

Fig. 6 is a graph illustrating changes of the tensile strength of a biaxially rolled polymer sheet;

Fig. 7 is a perspective view illustrating a cylindrical pressed article having a diameter of 70 mm, which has been obtained from a biaxially rolled reinforced polymer sheet having a high strength and a reduced anisotropy of the strength according to the present invention;

0287667

Fig. 8 is a diagram illustrating a machine for rolling in the transverse direction;

Fig. 9 is a diagram illustrating an embodiment of the process for biaxially rolling a polymer sheet according to the present invention;

Figs. 10(A) and 10(B) are diagrams illustrating the combination of the heating step and rolling step at the rolling test, based on which the present invention has been completed;

Figs. 11(A), 11(B) and 11(C) and Fig. 12 are graphs illustrating the results of the rolling tests of polypropylene, based on which the present invention has been completed;

Fig. 13 shows the birefringence and tensile strength of the biaxially rolled polymer sheet obtained in Example 1 of the present invention;

Fig.s 14 and 15 are graphs illustrating the tensile strength and Young's modulus of the stretched reinforced polymer sheet obtained in Example 2 of the present invention;

Figs. 16 and 17 are graphs illustrating results of the measurement of the tensile strength and Young's modulus of the stretched reinforced polymer sheet obtained in Example 3 of the present invention; and

Fig. 18 is a graph illustrating results of the measurement of the tensile strength and Young's modulus of the stretched reinforced polymer sheet obtained in Example 4 of the present invention.

EXPLANATION OF PREFERRED EMBODIMENTS OF THE INVENTION

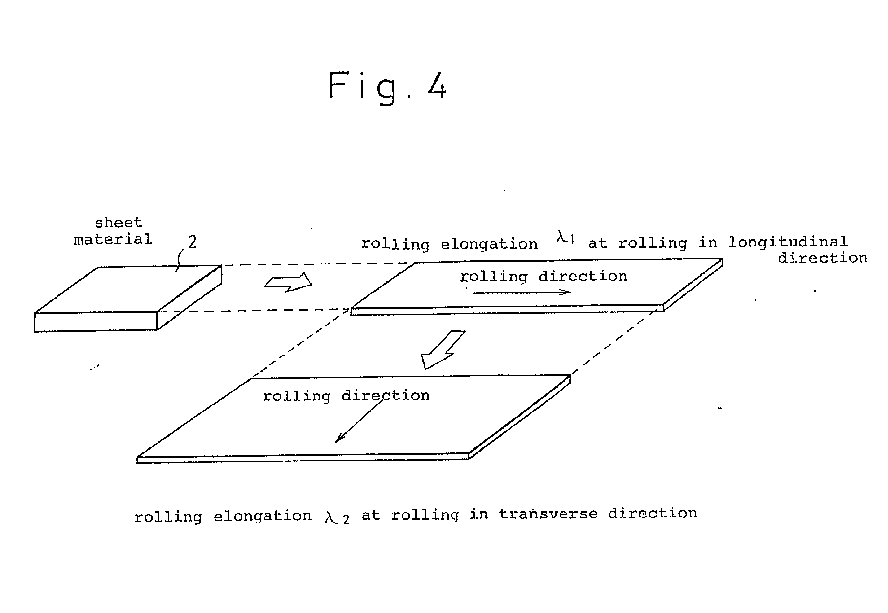

We made experiments in which a polymer sheet (for example, polypropylene) was subjected in the plasticized state at a high temperature to first stretching (rolling elongation = $\lambda_1$) and second stretching (rolling elongation = $\lambda_2$) in the orthogonal direction by rolling, as shown in Fig. 4.

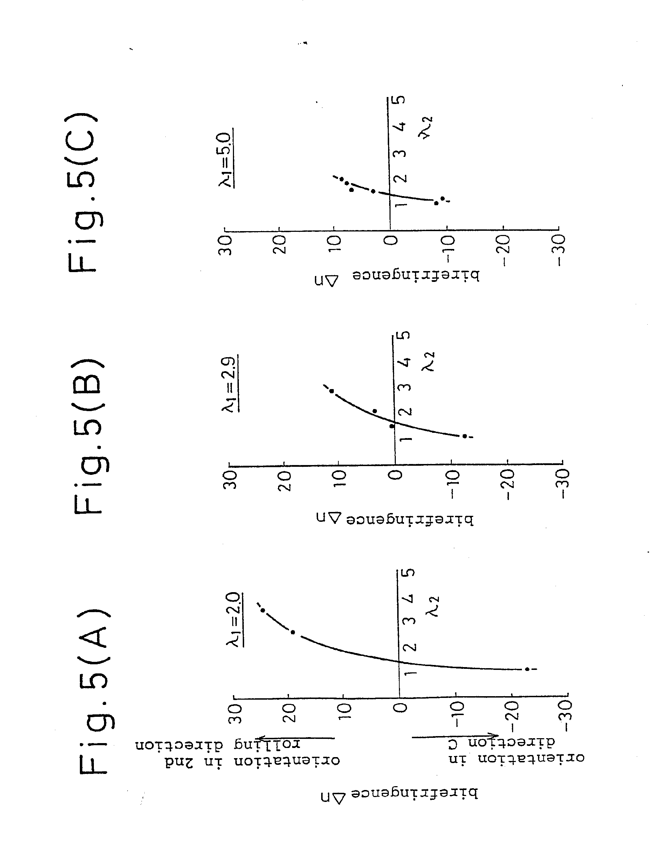

While conducting these experiments, the inventors found that in polymer sheet having the molecular chain stretched and oriented in two directions orthogonal to each other, the birefringence $\Delta n$ indicating the orientation degree continuously changes from positive values to negative values according to the rolling elongation $\lambda_2$ of the second stretching, regardless of whether the rolling elongation $\lambda_1$ of the first stretching is 2.0, 2.9, and 5.0, as shown in Figs. 5(A), 5(B), and 5(C).

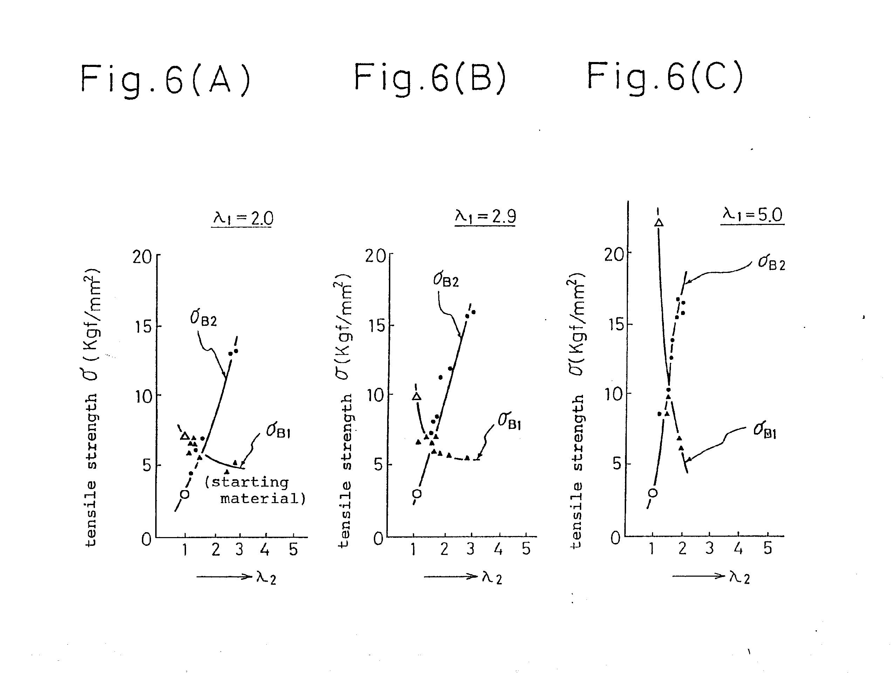

Furthermore, in connection with the tensile strengths in the two directions in these sheets, it was found that, as shown in Figs. 6(A), 6(B) and 6(C), the tensile strength $\sigma_{B2}$ in the second drawing direction drastically increases with an increase of $\lambda_2$ but the tensile strength $\sigma_{B1}$ in the first drawing direction decreases with increase of $\lambda_2$.

We found that $\lambda_2$ at which the tensile strengths $\sigma_{B1}$ and $\sigma_{B2}$ in the two directions are substantially equal to each other is about 1.5 regardless of $\lambda_1$ and this value of $\lambda_2$ corresponds to the birefringence $\Delta n$ of 0.

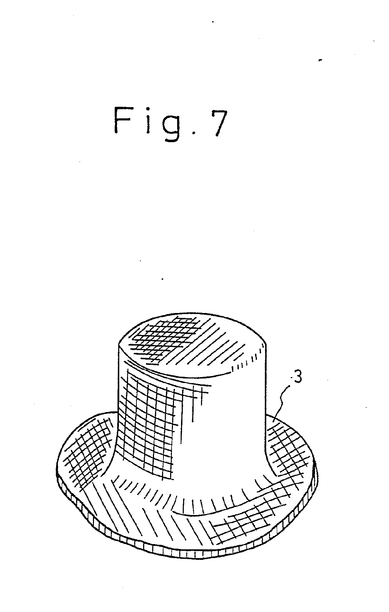

Moreover, we made the above-mentioned biaxially rolling experiments were carried out and the obtained polymeric material plates subjected to press-working experiments. For example, the biaxially roll-working was carried out at a first rolling elongation $\lambda_1$ of 3.0 and at a second rolling elongation $\lambda_2$ of 1.5. The obtained sheet had a birefringence $\Delta n$ of 0.1, a tensile strength $\sigma_1$ of 7.5 kgf/mm$^2$ and a tensile strength $\sigma_1$ of 6.8 kgf/mm$^2$. When this sheet was press-worked into a cylinder having a diameter of 70 mm, breaking did not occur at the forming step and a good pressed article 3 was obtained, as shown in Fig. 7. It was found that if the forming stroke is increased, forming can be accomplished to an extent that such the flange portion is lost, and rolled polymer sheet having a very high moldability can be obtained. Moreover, it was confirmed that, as seen from the pressed article 3 shown in Fig. 7, the flange width is substantially equal along the entire circumference and there is no anisotropy.

As is seen from the foregoing description, a biaxially stretched reinforced polymer sheet obtained by stretching and orienting the molecular chain of a polymer sheet in the plasticized state in two directions orthogonal or substantially orthogonal to each other, in which the birefringence $\Delta n$ is zero or in the vicinity thereof, is characterized in that the strength is much higher than that of the stock before rolling, there is no anisotropy and the press formability is excellent. Accordingly, this sheet material can be very effectively applied as a construction member for which a high strength and a good moldability are required.

The relationship between the molecular orientation degree $(f_O)$ and the birefringence $(\Delta n)$, which dominates the strength anisotropy, is represented by the following formula:

$$f_O = (\Delta n / \Delta n_c)(\rho_c / \rho) \qquad (I)$$

wherein $\Delta n_c$ stands for the inherent birefringence of the crystal, $\rho_c$ stands for the density of the crystal and $\rho$ stands for the density of the bulk (whole body) including the crystalline portion and the amorphous portion.

As is apparent from the formula (I), a proportional relationship is established between the molecular orientation degree $(f_O)$ and the birefringence $(\Delta n)$, and the magnitude of the birefringnece indicates the magnitude of the orientation degree.

The birefringence $(\Delta n)$ can be measured from a small piece of the polymer, for example, a square piece having a side of 1 to 2 mm, very easily, and therefore, the birefringence is very effective for evaluating the strength anisotropy.

An embodiment of the process for preparing the above-mentioned biaxially rolled reinforced polymer sheet according to the present invention will now be described.

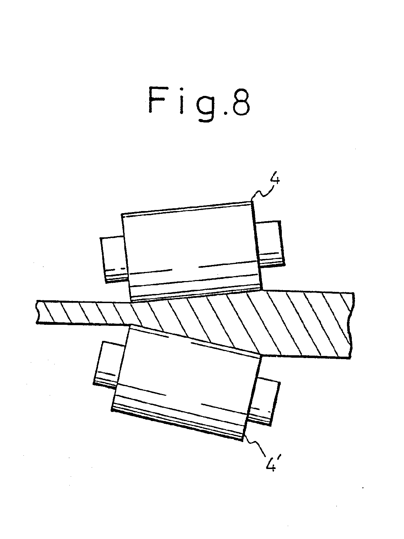

A high-temperature polymer having a rectangular, circular or other sectional shape, and which has been heated, kneaded and continuously extruded from an extruder, is rolled in a longitudinal direction by a rolling machine arranged downstream of the extruder and is elongated so that the length of the material is about 1.5 to about 10 times, preferably about 2 to about 10 times, the original length. Namely, the material is rolled so that the rolling elongation $\lambda_1$ in the longitudinal direction $\lambda_1 = (\ell o + \Delta \ell)/\ell o$ in which $\ell o$ stands for the length of the stock before rolling and $\Delta \ell$ stands for the increase of the length by rolling is about 1.5 to about 10. Then, the material is rolled in the transverse direction by tenter rolls 4 and 4', as shown in Fig. 8, which are arranged downstream of the longitudinal rolling machine, so that the width is increased at a rolling elongation not higher than 2, preferably from 1.5 to 2. Namely, the material is drawn so that the rolling elongation $\lambda_2$ in the transverse direction of the material is not higher than 2, preferably from 1.5 to 2, whereby a sheet having a predetermined thickness is obtained.

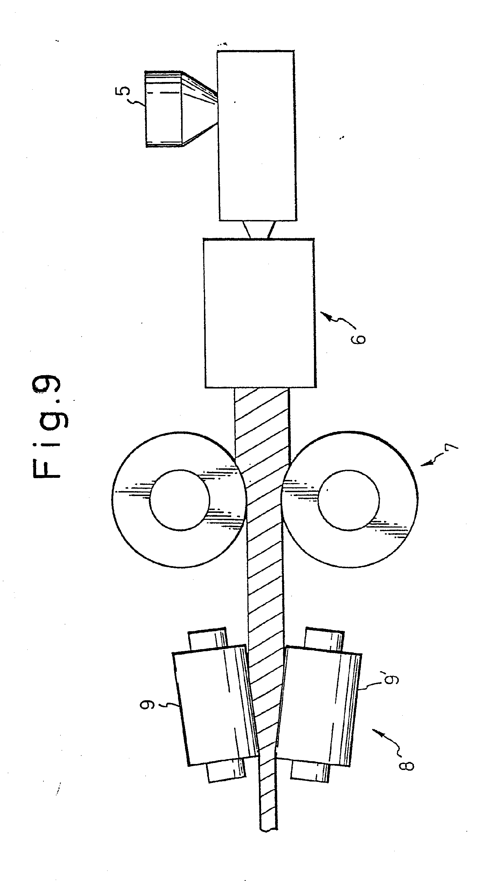

More specifically, for example, an installation as shown in Fig. 9 is used for biaxially rolling a polymer sheet according to the above-mentioned process of the present invention. In Fig. 9, reference numeral 6 stands for a hot extruder, reference numeral 7 represents a longitudinal rolling machine, and reference numeral 8 stands for a tenter rolling machine.

An embodiment where the present invention is carried out by using the installation shown in Fig. 9 will now be described. A pelletized polymer is supplied from a pellet supply opening 5 and is heated and kneaded in the hot extruder 6, and the polymer having a rectangular or circular sectional shape is continuously extruded. Then, this polymer is first rolled by the longitudinal rolling machine and is rolled at a rolling elongation $\lambda_1$ of from 1.5 to 10. Then, the polymer is stretched in the transverse direction at a draw ratio $\lambda_2$ of not higher than 2 by tenter rolls 9 and 9' of the tenter rolling machine 8. These drawing operations are continuously performed downstream of the hot extruder 6.

In the present invention, the process for preparing the biaxially stretched polymer sheet is not limited to the above-mentioned process, and there can be adopted, for example, a process in which after rolling in the longitudinal direction, (after cutting in an appropriate length is nececssary), the polymer sheet is turned by 90° by using an appropriate means (for example, a manipulator of a blooming mill at an iron-manufacturing plant or a steel plate-turning apparatus of a plank mill at an iron-manufacturing plant) and is delivered to a rolling machine, where the intended rolling in the transverse direction is carried out.

In the present invention, biaxially stretching includes a stretching in which the first stretching direction (for example, the longitudinal direction) and the subsequent stretching direction (for example, the transverse direction) are orthogonal or substantially orthogonal to each other, that is, the angle between the two stretching directions is 45 to 90°, preferably 80 to 90°.

Research was made with a view to further improving the characteristics of the product, and as a result, the following process was completed.

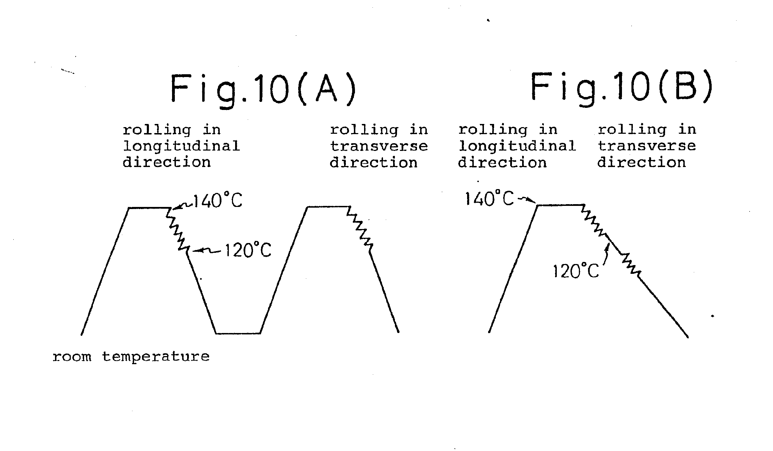

Namely, two combinations of the steps of heating and rolling polymer sheets were selected and experiments conducted, as shown in Fig. 10.

Figure. 10(A) shows a twice-heating and rolling process (two-heat rolling process) in which a polymer is heated, kneaded and extruded, the extruded polymer sheet is rolled in the longitudinal direction, the material is air-cooled to a temperature close to room temperature, the polymer sheet is heated again, and then tenter rolling is carried out.

Figure. 10(B) shows a once-heating and rolling process (one-heat rolling process) in which a polymer is heated, kneaded and rolled in the longitudinal direction, and subsequently, tenter rolling is carried out. In this process, the polymer sheet is sometimes allowed to stand for a short time after rolling in the longitudinal direction, but cooling to a temperature close to room temperature, as adopted in the process shown in Fig. 10(A), is not conducted.

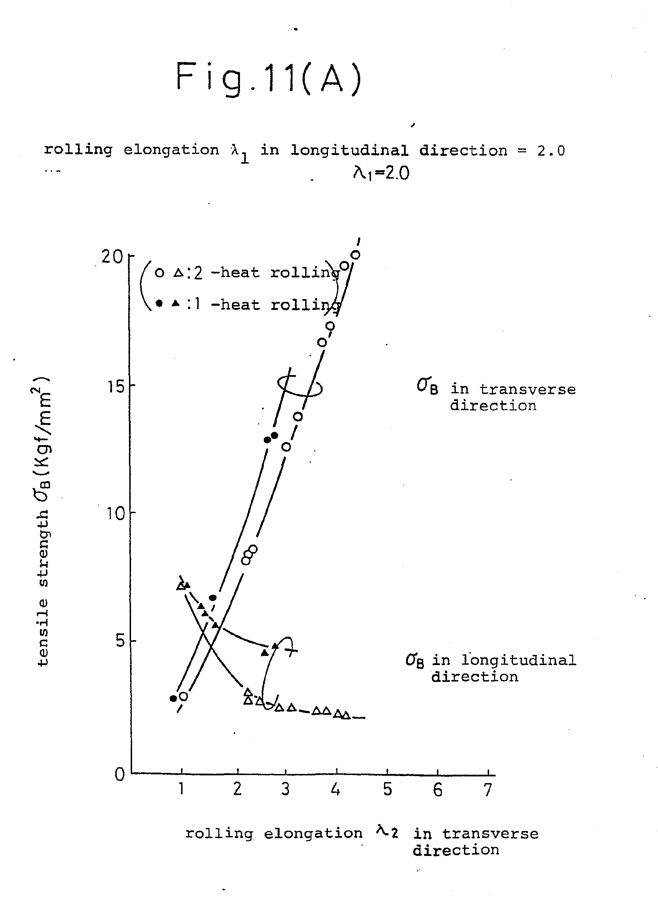

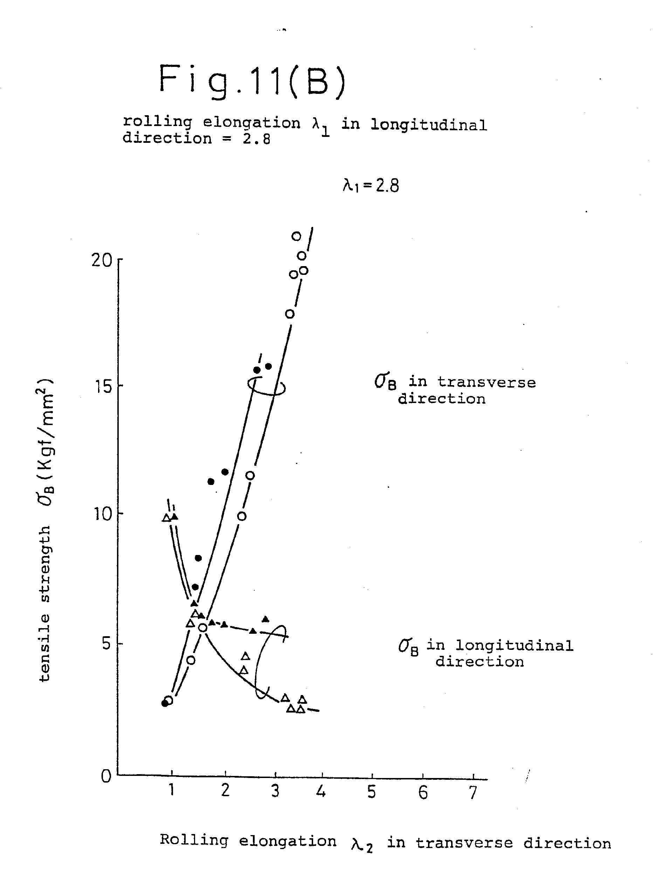

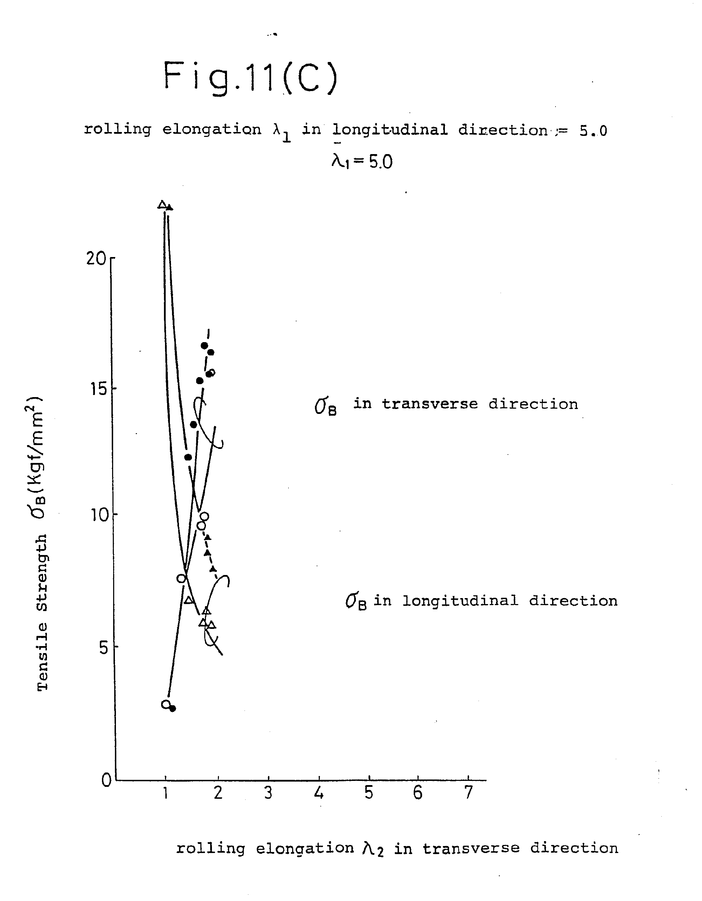

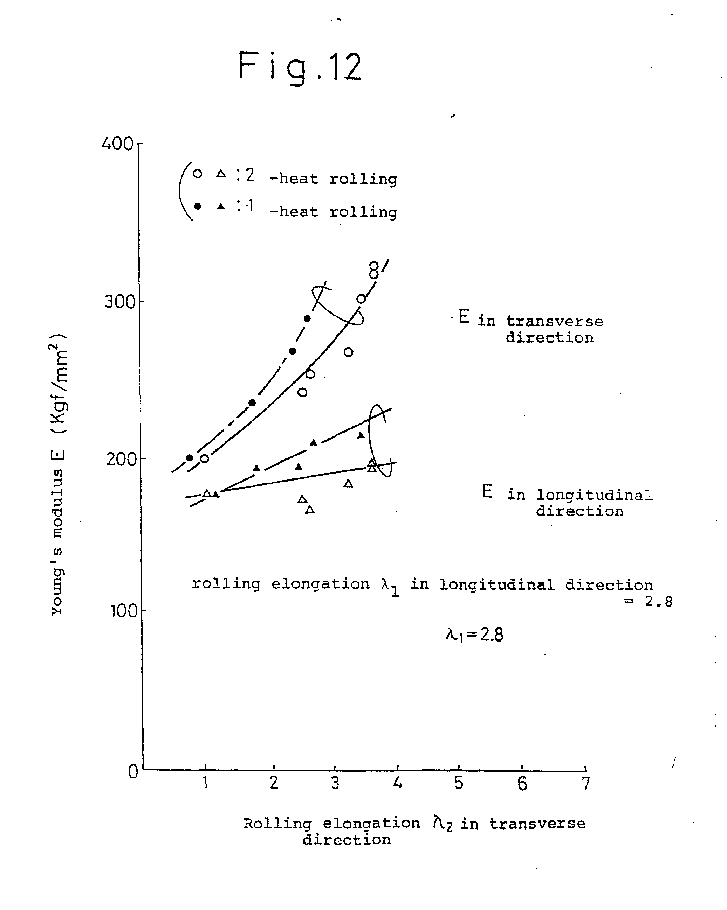

Data of the tensile strength and Young's modulus, obtained with respect to polymer sheet prepared according to the above-mentioned two processes using polypropylene as a typical instance of the polymer, are shown in Figs. 11(A), 11(B), 11(C), and 12.

Figures. 11(A), 11(B), and 11(C) are graphs showing the tensile strengths of polymer sheets in the longitudinal and transverse directions.

As seen from these graphs, the tensile strength in the transverse direction drastically an increases with increase of the rolling elongation $\lambda_2$ in the transverse direction, and the tensile strength in the longitudinal direction decreases with an increase of the rolling elongation $\lambda_2$ in the transverse direction.

From these results, it has been clarified that, where a polymer sheet in which the tensile strength in the longitudinal direction is substantially equal to the tensile strength in the transverse direction, that is, the strength anisotropy is small, is obtained, as the rolling elongation $\lambda_1$ at the longitudinal rolling is increased, the tensile strength is increased.

In the one-heat rolling process indicated by marks "●" and "▲" in Fis. 11(A), 11(B) and 11(C), the tensile strengths in the longitudinal and transverse directions, relative to the rolling elongation $\lambda_2$ at the transverse rolling, are higher than in the two-heat rolling process indicated by marks "o" and "Δ" in Figs. 11(A), 11(B) and 11(C), and in the one-heat roling process, the point at which both the tensile strengths are equal is higher than in the two-heat rolling process. Figure. 12 shows the Young's modulus of the same rolled product ad shown in Fig. 11, which has been obtained at a rolling elongation $\lambda_1$ of 2.8 at the longitudinal rolling. In this case, the behavior of the Young's modulus is different from that of the tensile strength. Namely, as the rolling elongation $\lambda_2$ at the transverse rolling increases, the Young's modulus tends to increase either in the longitudinal direction or in the transverse direction, and the tendency the increase is higher in the transverse direction.

When the rolling elongation $\lambda_2$ at the transverse rolling is adjusted to about 1.5, by the effects of $\lambda_1$ and $\lambda_2$, the Young's modulus is increased to 180 to 220 kgf/mm$^2$ which is much higher than the Young's modulus of the stock before rolling, which is about 100 kgf/mm$^2$. Furthermore, the Young's modulus attained in the one-heat rolling process is higher than in the two-heat rolling process.

If the one-heat rolling process is adopted according to the preferred embodiment of the present invention, the following advantages can be attained.

1) Since the heating, kneading, extruding steps and all subsequent steps for obtaining a product can be consistently and continuously carried out, the productivity is high.

2) A product having predetermined thickness and width can be easily obtained only by adjusting the reduction ratio in a rolling machine.

3) Since an extruded high-temperature polymer sheet is directly rolled to obtain a product, the energy consumption is small.

4)   Since the rolling elongation $\lambda_2$ at the transverse rolling which is mechanically difficult is low, construction of the process is easy.

5)   Since the material is kept continuous until the final rolling in the transverse direction is completed, there is no portion to be cut down and a polymer sheet can be prepared at a high yield.

6)   Since the process is consistent and continuous, the steps are simple and the operations are easy.

The operations of the above-mentioned one-heat rolling process will now be described.

First, as shown in Fig. 9, a pellet of a crystalline polymer such as polypropylene, polyethylene, a nylon (i.e., polyamide) or a polyeser is charged into the extruder 6 from the pellet supply opening 5, and the melt heated and kneaded in the extruder 6 is charged and extruded into a rectangular or circular mold to form a continuous body of a solid slab or billet having a rectangular or circular section. This continuous slab or billet is continuously fed into the longitudinal rolling machine 7 arranged subsequently to the extruder 6 and is rolled in the longitudinal direction at a predetermined longitudinal rolling elongation of 1.5 to 10 so that a predetermined thickness is obtained.

Then, the material is continuously fed into the transverse rolling machine 8 arranged subsequent to the longitudinal rolling machine 7 and the material is stretched at a rolling elongation not higher than 2 in the transverse direction.

In the transverse rolling machine (tentering rolling machine) 8, the two rolls 9 and 9' are arranged at upper and lower points in the same vertical section, and these rolls 9 and 9' are moved in the transverse direction of the material while being rotated and driven under a predetermined pressure, whereby rolling drawing in the transverse direction is accomplished.

When one rolling operation (first pass) in the transverse direction is completed, the rotation direction of the top and bottom rolls is reversed to start the movement in the opposite direction, and rolling of the next pass is carried out. Since the material to be rolled is continuously advanced in the longitudinal direction, the rolling position at the first pass naturally should be different from the position at the next pass, and tenter rolling is advanced continuously in the longitudinal direction.

The reduction ratio at tenter rolling is set while the width of the product and the predetermined rolling elongation in the transverse direction are taken into consideration.

The rolled sheet (continuous body) is cooled by a cooling medium such as air or water and is wound in the form of a coil by a winder or is cut to a predetermined size in the longitudinal direction by a shearing machine to obtain a cut sheet product.

In the above-mentioned consistent preparation process, if it is necessary to prevent lowering of the temperature of the material to be rolled, or to conduct rolling at a predetermined temperature, a roll-heating apparatus or material-heating means such as a warm wind or infrared rays may be used.

The polymer is composed mainly of a crystalline polymer having rollable and reinforcable characteristics, and various additives such as a stabilizer or fibers or fillers may be incorporated into the polymer.

In carrying out the present invention, rolling may be combined with deformation of the material, for example, deformation by a pulling apparatus. It has been clarified that also in this case, the intended product characteristics of the present invention can be obtained.

According to the present invention, good product characteristics can be obtained if the rolling elongation in the transverse direction of the material is 2 at highest. In the one-heat rolling process, if the material is first stretched by rolling in the longitudinal direction and the material is then strechted in the transverse direction by applying a pulling force to the material in the transverse direction, the installation can be simplified and a continuous arrangement can be easily accomplished.

Examples

The present invention will now be described in detail with reference to the following examples that by no means limit the scope of the invention.

Example 1

A stock before rolling having a thickness of 21 mm and a width of 100 mm, which has been obtained by extruding polypropylene having a melting point of 162°C by an extruder, was rolled in the longitudinal direction under the temperature and rolling conditions shown in Table 1 by using a rolling machine having a roll diameter of 165 mm, and the material was then rolled in the transverse direction under conditions shown in Table 1.

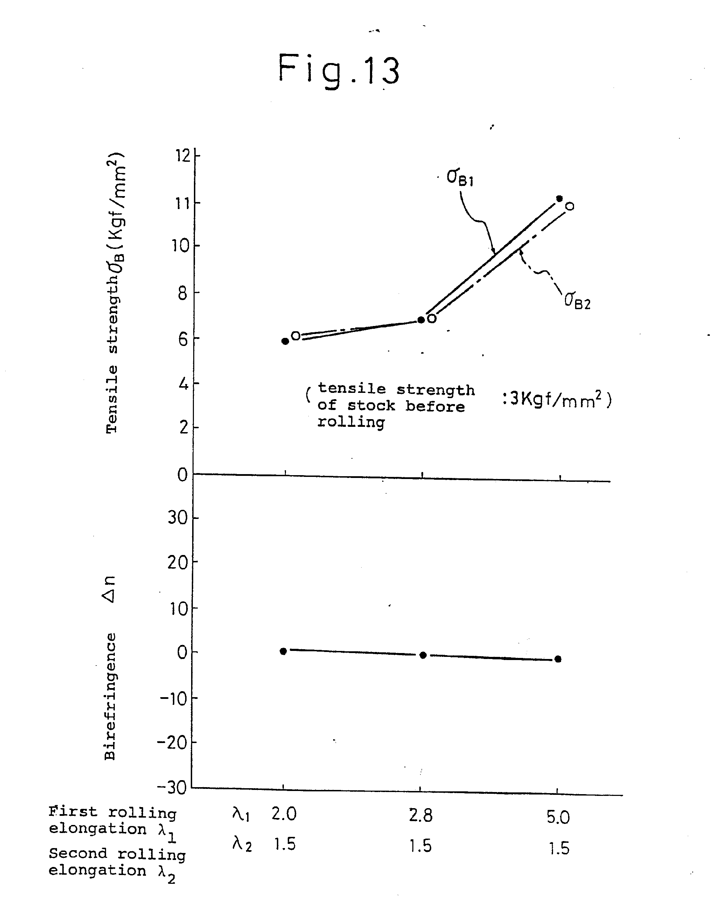

The so-rolled material was air-cooled, and a square test piece having a side of 2 mm was cut from the rolled material and was used for the measurement of the birefringence ($\Delta n$). Furthermore, a tensile test piece was sampled and subjected to the tensile test, and accordingly, the birefringence and tensile strength were determined. The results are shown in Fig. 13.

As seen from the results shown in Fig. 13, the tensile strength of the material heated, kneaded and extruded from the extruder was 3 kgf/mm$^2$, but in contrast, in the rolled reinforced polymer sheet of the present invention in which the rolling elongation $\lambda_1$ in the longitudinal direction was 2.0, 2.8 or 5.0 and the

rolling elongation $\lambda_2$ in the transverse direction was 1.5, the birefringence ($\Delta n$) was 0.1, 0.05 or -0.1 and the tensile strength ($\sigma_B$) characteristics were such that $\sigma_{B1}$ was 5.9 kgf/mm$^2$ and $\sigma_{B2}$ was 6.1 kgf/mm$^2$ when $\lambda_1$ 2.0, $\sigma_{B1}$ was 7.0 kgf/mm$^2$ and $\sigma_{B2}$ was 7.0 kgf/mm$^2$ when $\lambda_1$ = 2.8, or $\sigma_{B1}$ was 11.5 kgf/mm$^2$ and $\sigma_{B2}$ was 11.2 kgf/mm$^2$ when $\lambda_1$ = 5.0.

As apparent from the results of the present example, as the draw ratio $\lambda_1$ at the first rolling (i.e., rolling in the longitudinal direction) was increased as 2.0 → 2.8 → 5.0, the tensile strengths $\sigma_B$ in both directions were equally increased. Namely, according to the present invention, a rolled reinforced polymer sheet having a high strength and a reduced strength anisotropy was obtained.

The rolled reinforced polymer sheet obtained in the present example were pressed into a cylinder having a diameter of 70 mm. In each case, draw-forming was completed and the cup height was equal in the circumferential direction. Accordingly, it was confirmed that the sheet materials obtained in the present example had an especially excellent press-formability.

### Table 1
#### Rolling Conditions

| Material | polypropylene | | |
|---|---|---|---|
| Material temperature (°C) | 140 | | |
| Roll temperature (°C) | 120 | | |
| Rolling elongation $\lambda_1$ in the longitudinal direction | 2.0 | 2.8 | 5.0 |
| Rolling elongation $\lambda_2$ in the transverse direction | 1.5 | 1.5 | 1.5 |

Example 2

Propylene having a melting point of 162°C was heated, kneaded and extruded into a stock before rolling having a thickness of 21 mm and a width of 100 mm by using an extruder. The stock before rolling was drawn in the longitudinal direction under temperature and rolling conditions shown in Table 2 by using a rolling machine having a roll diameter of 165 mm. Then, the material was air-cooled to room temperature over a period of 5 hours. The material was then heated to 140°C again and rolled in the transverse direction under conditions shown in Table 2.

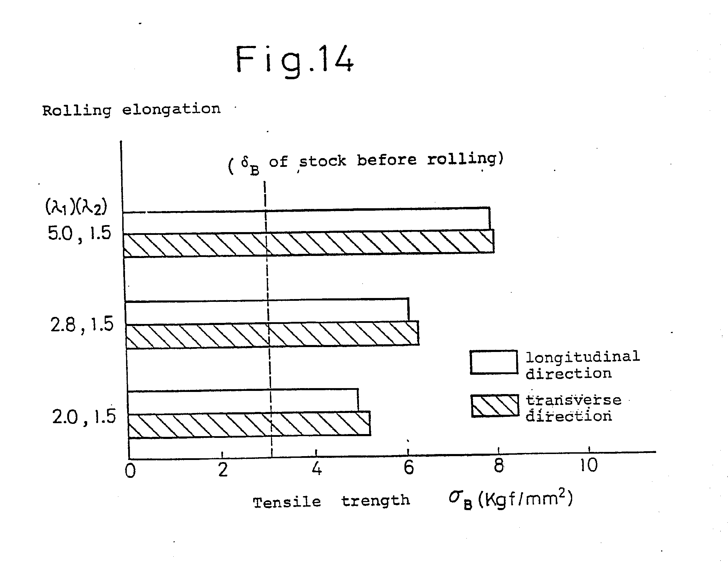

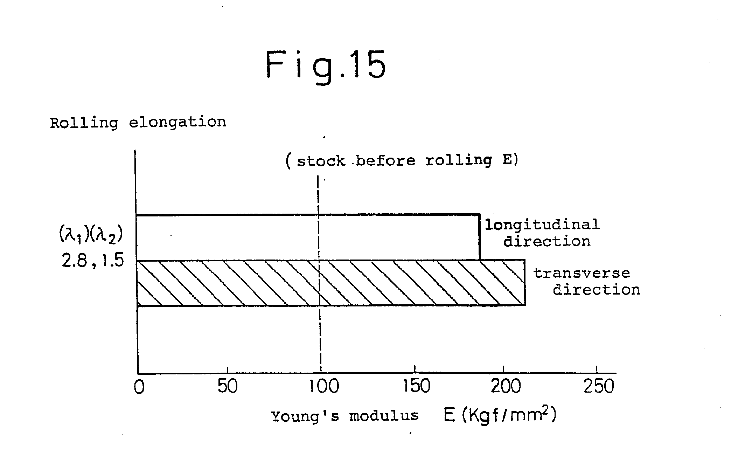

The rolled sheet material was air-cooled, and a tensile test piece was sampled and the tensile test was carried out to determine the tensile strength and Young's modulus. The results are shown in Figs. 14 and 15.

As apparent from the results shown in Fig. 14, the tensile strength of the polymer heated, kneaded and extruded from the extruder was 3 $kgf/mm^2$, but in contrast, in the stretched reinforced polymer sheet obtained according to the present invention, in the case where the rolling elongation $\lambda_1$ in the longitudinal direction was any of 2.0, 2.8 and 5.0, the tensile strength $\sigma_B$ was high; that is, $\sigma_B$ was 5 $kgf/mm^2$ when $\lambda_1 = 2.0$, $\sigma_B$ was 6 $kgf/mm^2$ when $\lambda_2 = 2.8$ and $\sigma_B$ was 8 $kgf/mm^2$ when $\lambda_1$ 5.0. In the polymer sheet obtained according to the present invention, the tensile strengths in the longitudinal and transverse directions were substantially equal; that is, the strength anisotropy was very small. The date of the Young's modulus of the material in which $\lambda_1$ was 2.8, as a typical instance of the materials shown in Fig. 14, are shown in Fig. 15. As apparent from Fig. 15, the Young's modulus of the polymer heated, kneaded and extruded from the extruder was 100 $kgf/mm^2$, but in contrast, according to the present invention, a sheet material was obtained in which the Young's modulus in the longitudinal direction was 190 kgf/mm$^2$ and the Young's modulus in the transverse direction was 210 kgf/mm$^2$.

### Table 2
#### Rolling Conditions

| Material | polypropylene | | |
|---|---|---|---|
| Material temperature (°C) | 140 | | |
| Roll temperature (°C) | 120 | | |
| Rolling elongation $\lambda_1$ in the longitudinal direction | 2.0 | 2.8 | 5.0 |
| Rolling elongation in the transverse direction | 1.5 | 1.5 | 1.5 |

### Example 3

Polypropylene having a melting point 162°C was heated, kneaded and extruded into a stock before rolling having a thickness of 21 mm and a width of 100 mm by an extruder. The material was rolled in the longitudinal direction under the temperature and rolling conditions shown in Table 3 by a rolling machine having a roll diameter of 165 mm, which was arranged subsequent to the extruder. Then, the material was rolled in the transverse direction under the conditions shown in Table 3 by a subsequent rolling machine (having a roll diameter of 140 mm) without lowering the temperature of the material to room temperature.

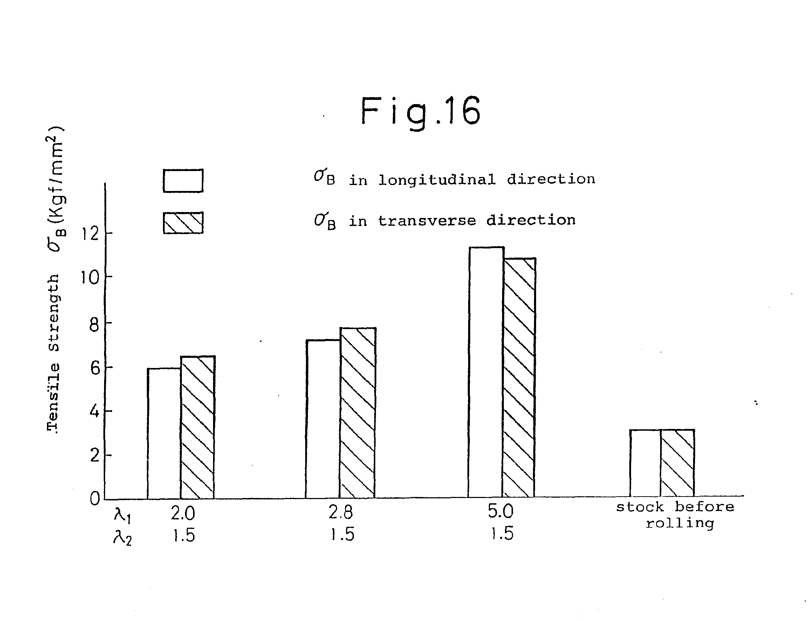

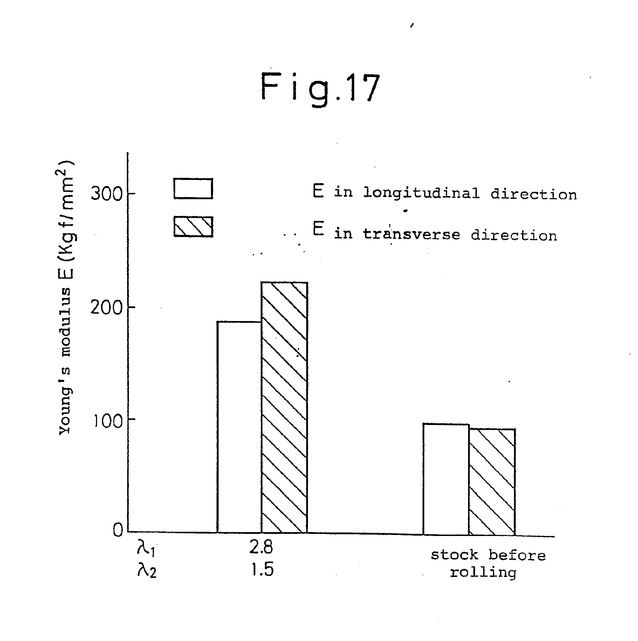

The rolled sheet material was air-cooled, and a tensile test piece was sampled and the tensile test was carried out at room temperature to determine the tensile strength and Young's modulus. The obtained results are shown in Figs. 16 and 17.

As apparent from the results shown in Fig. 16, the tensile strength of the polymer heated, kneaded and extruded from the extruder was 3 kgf/mm$^2$, where as in the one-heat roll-processed materials according to the present invention, when the rolling elongation $\lambda_1$ in the longitudinal directions were 2.0, 2.8 and 5.0, the tensile strengths $\sigma_B$ were 6 kgf/mm$^2$, 7 kgf/mm$^2$ and 11 kgf/mm$^2$, respectively. Moreover, in each of the sheet materials obtained according to the present invention, the tensile strengths in the longitudinal and transverse directions were substantially equal and the strength anisotropy was small.

Moreover, as apparent from the results shown in Fig. 17, in the above-mentioned material (sheet material) of the present invention in which the rolling elongation $\lambda_1$ in the longitudinal direction was 2.8, the Young's modulus was higher than 200 kgf/mm$^2$ and the Young's of the polymer heated, kneaded and extruded from the extruder was 100 kgf/mm$^2$.

EX3

### Table 3

### Rolling Conditions

| Resin Material | polypropylene | | |
|---|---|---|---|
| Rolling temperature at longitudinal rolling | 150°C | | |
| Rolling temperature at transverse rolling | 140°C | | |
| Rolling elongation $\lambda 1$ in the longitudinal direction | 2.0 | 2.8 | 5.0 |
| Rolling elongation $\lambda 2$ in the transverse direction | 1.5 | 1.5 | 1.5 |

When the one-heat process and two-heat process disclosed in Examples 2 and 3 are compared, the one-heat process is relatively advantageous in the obtained material characteristics (attained strength level). In the two-heat process, however, a transverse rolling apparatus need not be especially disposed independently from the longitudinal rolling apparatus. Namely, according to the two-heat process, after the reheating step, the material can be supplied again to the apparatus used for rolling in the longitudinal direction and can be rolled in the transverse direction, and therefore, the two-heat process is advantageous in that the operation can be performed by a simple installation. Accordingly, the two-heat process has a high industrial utility. Therefore, it is decided according to the conditions in an actual plant whether the one-heat process or the two-heat process should be selected.

Example 4

Polyethylene having a melting point of 134°C was heated, kneaded and extruded into a stock before rolling having a thickness of 20 mm and a width of 330 mm. The material was rolled in the longitudinal direction under the temperature and rolling direction shown in Table 4 by a rolling machine having a roll diameter of 165 mm and then rolled in the transverse direction under conditions shown in Table 4.

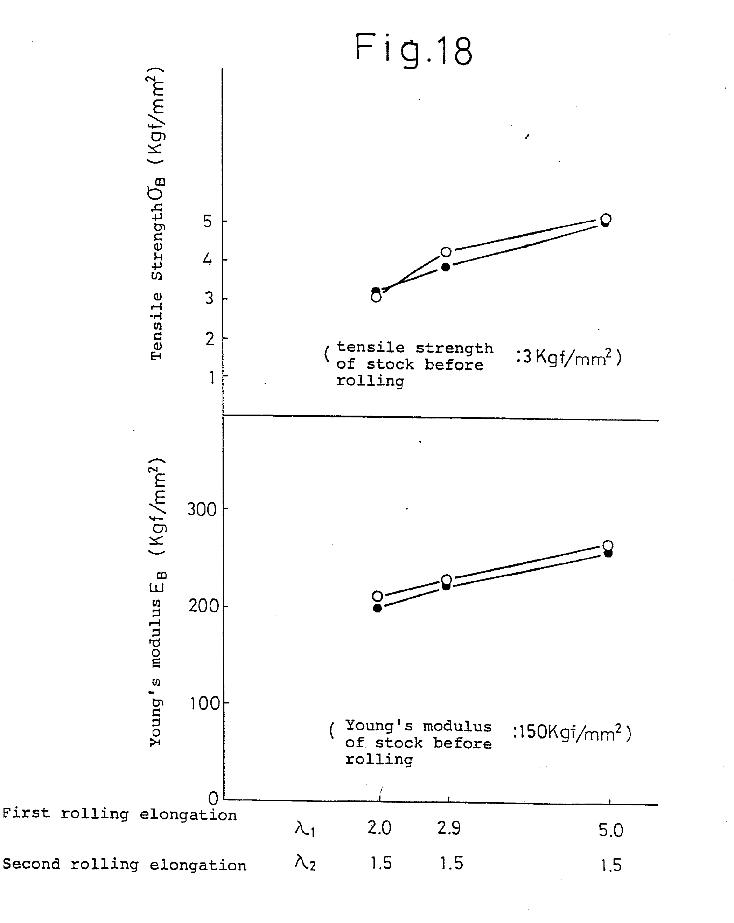

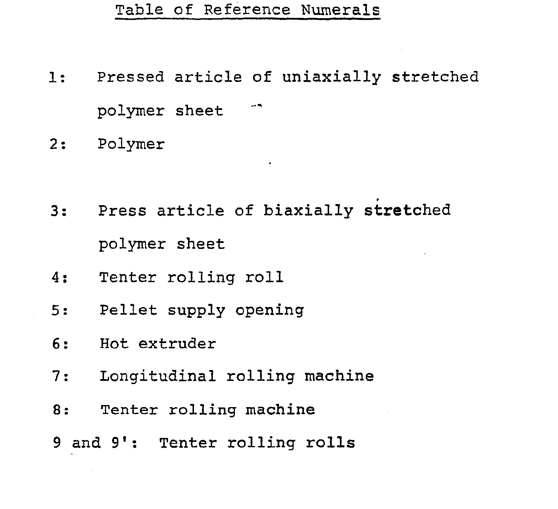

The rolled material was air-cooled and a tensile test piece was sampled, and the tensile test was carried out to determine the tensile strength and Young's modulus. The results are shown in Fig. 18.

As apparent from the results shown in Fig. 18, the tensile strength and Young's modulus of the polymeric material heated, kneaded and extruded from the extruder were 3 kgf/mm$^2$ and 150 kgf/mm$^2$, respectively, whereas in the rolled reinforced polymer sheets of the present invention in which the rolling elongation $\lambda_1$ in the longitudinal direction was 2.0, 2.9, or 5.0 and the draw ratio $\lambda_2$ in the transverse direction was 1.5, the tensile strength ($\sigma_B$) characteristics were such that $\sigma_{B1}$ was 3.1 kgf/mm$^2$ and $\sigma_{B2}$ was 3.3 kgf/mm$^2$ when $\lambda_1 = 2.0$,

$\sigma_{B1}$ was 4.3 kgf/mm$^2$ and $\sigma_{B2}$ was 3.9 kgf/mm$^2$ when $\lambda_1 = 2.9$ and $\sigma_{B1}$ was 5.2 kfg/mm$^2$ and $\sigma_{B2}$ was 5.1 kfg/mm$^2$ when $\lambda_1$ 5.0, and the tensile modulus ($E_B$) characteristics were such that $E_{B1}$ was 210 kgf/mm$^2$ and $E_{B2}$ was 200 kgf/mm$^2$ when $\lambda_1$ 2.0, $E_{B1}$ was 230 kgf/mm$^2$ and $E_{B2}$ was 230 kgf/mm$^2$ when $\lambda_1$ 2.9 and $E_{B1}$ was 260 kgf/mm$^2$ and $E_{B2}$ was 270 kgf/mm$^2$ when $\lambda_1$ 5.0.

As apparent from the results obtained in the present example, as the rolling elongation $\lambda_1$ at the first rolling (in the longitudinal direction) was increased as 2.0 → 2.9 → 5.0, the tensile strength $\sigma_B$ and Young's modulus $E_B$ were increased equally in both the longitudinal direction and the transverse direction. Namely, rolled reinforced polymer sheet having a high strength and a reduced strength anisotropy could be obtained according to the present invention.

### Table 4
### Rolling Conditions

| Material | polypropylene | | |
|---|---|---|---|
| Material temperature (°C) | 120 | | |
| Roll temperature (°C) | 100 | | |
| Rolling elongation $\lambda_1$ in the longitudinal direction | 2.0 | 2.9 | 5.0 |
| Rolling elongation $\lambda_2$ in the transverse direction | 1.5 | 1.5 | 1.5 |

As apparent from the foregoing description, the biaxially stretched reinforced polymer sheet obtained according to the present invention has a high strength and a high Young's modulus and is advantageous in that the in-plate anisotropy of these characteristics is small. Furthermore, the process of the present

0287667

invention has an excellent in productivity and product yield, the preparation steps are simple and consistent, and an installation in which operations are easy can be adopted.  Therefore, the process of the present invention is very advantageous from the economical viewpoint.

0287667

## CLAIMS

1. A biaxially stretched reinforced polymer sheet obtained by stretching and orienting the molecular chain of a polymer in the plasticized state in two directions orthogonal or substantially orthogonal to each other, wherein the birefringence is zero or in the vicinity thereof.

2. A polymer sheet as claimed in claim 1, wherein the polymeric material is polyethylene, polypropylene, a nylon, or a polyester.

3. A process for the preparation of a biaxially stretched reinforced polymer sheet, which comprises rolling a heated, kneaded and extruded polymer in the plasticized state in one direction at a rolling elongation of from 1.5 to 10 and then rolling the polymer sheet in another direction orthogonal or substantially orthogonal to said one direction at a rolling elongation not higher than 2.

4. A process as claimed in claim 3, wherein the rolling elongation in said one direction is from 2 to 10 and the rolling elongation in said another direction is from 1.5 to 2.

5. A process as claimed in claim 3, wherein the angle between said one direction and said another direction is from 45 to 90°.

6. A process as claimed in claim 3, wherein after rolling in said one direction, the polymer sheet is once cooled and heated again, and then, rolling in said another direction is carried out.

7. A process as claimed in claim 3, wherein after rolling in said one direction, rolling in said another direction is carried out without lowering the material temperature to room temperature or a level close thereto.

8. A process as claimed in claim 7, wherein the rolling elongation in said one direction is from 2 to 10 and the rolling elongation in said another direction is from 1.5 to 2.

9.  A process as claimed in claim 7, wherein the angle between said one direction and said another direction is from 45 to 90°.

10.  A process as claimed in claim 7, wherein rolling in said one direction and rolling in said another direction are continuously carried out.

CLAIMS (Substitution)

1.   (deleted)

2.   (deleted)

3.   A process for the preparation of a biaxially stretched reinforced polymer sheet, which comprises rolling a heated, kneaded and extruded polymeric material in the plasticized state in one direction at a rolling elongation of from 1.5 to 10 and then, rolling the polymer sheet in another direction orthogonal or substantially orthogonal to said one direction at a rolling elongation not higher than 2.

4.   A process as claimed in claim 3, wherein the rolling elongation in said one direction is from 2 to 10 and the rolling elongation in said another direction is from 1.5 to 2.

5.   A process as claimed in claim 3, wherein the angle between said one direction and said another direction is from 45 to 90°.

6.   A process as claimed in claim 3, wherein after rolling in said one direction, the polymer sheet is once cooled and heated again, and then, rolling in said another direction is carried out.

7.   A process as claimed in claim 3, wherein after rolling in said one direction, rolling in said another direction is carried out without lowering the material temperature to room temperature or a level close thereto.

8.   A process as claimed in claim 7, wherein the rolling elongation in said one direction is from 2 to 10 and the rolling elongation in said another direction is from 1.5 to 2.

9.   A process as claimed in claim 7, wherein the angle between said one direction and said direction is from 45 to 90°.

10.   (amended) A process as claimed in claim 7, wherein rolling in said one direction and rolling in said another direction are continuously carried out.

$^1\!\!/_{21}$

# Fig.1

(prior art)

# Fig.2

(prior art)

# Fig. 3

(prior art)

# Fig. 4

sheet
material   2

rolling elongation $\lambda_1$ at rolling in longitudinal direction

rolling direction

rolling direction

rolling elongation $\lambda_2$ at rolling in transverse direction

Fig.5(A)  Fig.5(B)  Fig.5(C)

Fig.6(A)  Fig.6(B)  Fig.6(C)

$\lambda_1 = 2.0$

$\lambda_1 = 2.9$

$\lambda_1 = 5.0$

6/21

02-876667

# Fig. 7

3

# Fig.8

Fig.9

# Fig.10(A)    Fig.10(B)

| rolling in longitudinal direction | rolling in transverse direction | rolling in longitudinal direction | rolling in transverse direction |

140°C

120°C

room temperature

140°C

120°C

# Fig.11(A)

rolling elongation $\lambda_1$ in longitudinal direction = 2.0

$\lambda_1 = 2.0$

- $\bigcirc$ $\triangle$ : 2 -heat rolling
- $\bullet$ $\blacktriangle$ : 1 -heat rolling

$\sigma_B$ in transverse direction

$\sigma_B$ in longitudinal direction

tensile strength $\sigma_B$ (Kgf/mm$^2$)

rolling elongation $\lambda_2$ in transverse direction

# Fig.11(B)

rolling elongation $\lambda_1$ in longitudinal
direction = 2.8

$\lambda_1 = 2.8$

$\sigma_B$ in transverse
direction

$\sigma_B$ in longitudinal
direction

tensile strength $\sigma_B$ (Kgf/mm²)

Rolling elongation $\lambda_2$ in transverse direction

# Fig.11(C)

rolling elongation $\lambda_1$ in longitudinal direction = 5.0

$$\lambda_1 = 5.0$$

$\sigma_B$ in transverse direction

$\sigma_B$ in longitudinal direction

rolling elongation $\lambda_2$ in transverse direction

Fig.12

Rolling elongation $\lambda_2$ in transverse direction

# Fig.13

Tensile strength $\sigma_B$ (Kgf/mm²)

$\sigma_{B1}$

$\sigma_{B2}$

( tensile strength of stock before rolling     :3Kgf/mm² )

Birefringence $\Delta n$

| First rolling elongation $\lambda_1$ | $\lambda_1$ | 2.0 | 2.8 | 5.0 |
| Second rolling elongation $\lambda_2$ | $\lambda_2$ | 1.5 | 1.5 | 1.5 |

# Fig.14

Rolling elongation

($\delta_B$ of stock before rolling)

$(\lambda_1)(\lambda_2)$
5.0 , 1.5

2.8 , 1.5

2.0 , 1.5

□ longitudinal direction

▨ transverse direction

0     2     4     6     8     10

Tensile trength     $\sigma_B$ (Kgf/mm²)

# Fig.15

Rolling elongation

( stock before rolling E)

$(\lambda_1)(\lambda_2)$

2.8 , 1.5

longitudinal direction

transverse direction

Young's modulus   E (Kgf/mm²)

0        50       100      150      200      250

# Fig.16

Tensile strength $\sigma_B$ (Kgf/mm$^2$)

□ $\sigma_B$ in longitudinal direction

▨ $\sigma'_B$ in transverse direction

| | $\lambda_1$ 2.0 | 2.8 | 5.0 | stock before rolling |
| $\lambda_2$ | 1.5 | 1.5 | 1.5 | |

0287667

# Fig.17

Young's modulus E (Kgf/mm²)

300

200

100

0

☐ E in longitudinal direction

▨ E in transverse direction

λ₁    2.8

λ₂    1.5

stock before rolling

# Fig.18

Tensile Strength $\sigma_B$ (Kgf/mm²)

5
4
3
2
1

( tensile strength of stock before rolling    :3 Kgf/mm² )

Young's modulus $E_B$ (Kgf/mm²)

300

200

100

( Young's modulus of stock before rolling    :150Kgf/mm² )

0

First rolling elongation      $\lambda_1$    2.0    2.9        5.0

Second rolling elongation     $\lambda_2$    1.5    1.5        1.5

21/21

## Table of Reference Numerals

1: Pressed article of uniaxially stretched polymer sheet

2: Polymer

3: Press article of biaxially stretched polymer sheet

4: Tenter rolling roll

5: Pellet supply opening

6: Hot extruder

7: Longitudinal rolling machine

8: Tenter rolling machine

9 and 9': Tenter rolling rolls

0287667

# INTERNATIONAL SEARCH REPORT

International Application No    PCT/JP87/00726

## I. CLASSIFICATION OF SUBJECT MATTER (if several classification symbols apply, indicate all)³

According to International Patent Classification (IPC) or to both National Classification and IPC

Int.Cl⁴    B29C55/18, B29C43/26

## II. FIELDS SEARCHED

| Minimum Documentation Searched⁴ | |
|---|---|
| Classification System | Classification Symbols |
| IPC | B29C55/02, B29C55/18, B29C43/22-43/26 |

Documentation Searched other than Minimum Documentation
to the Extent that such Documents are Included in the Fields Searched⁵

| | |
|---|---|
| Jitsuyo Shinan Koho | 1926 - 1987 |
| Kokai Jitsuyo Shinan Koho | 1971 - 1987 |

## III. DOCUMENTS CONSIDERED TO BE RELEVANT¹⁴

| Category* | Citation of Document, with indication, where appropriate, of the relevant passages¹⁷ | Relevant to Claim No¹⁸ |
|---|---|---|
| Y | JP, A, 61-64427 (Kuraray Co., Ltd.) 2 April 1986 (02. 04. 86) Claim and page 3, lower left column, line 6 to page 4, lower left column, line 6 (Family: none) | 1-10 |
| Y | JP, A, 61-31229 (Kuraray Co., Ltd.) 13 February 1986 (13. 02. 86) Claim and page 3, upper left column, line 10 to lower right column, line 9 (Family: none) | 1-10 |
| Y | JP, A, 54-111579 (Sekisui Jushi Co., Ltd.) 31 August 1979 (31. 08. 79) (Family: none) | 1-10 |
| Y | JP, B1, 46-7478 (Toray Industries, Inc.) 24 February 1971 (24. 02. 71) (Family: none) | 1-10 |

* Special categories of cited documents:¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 10, 1987 (10.12.87) | December 21, 1987 (21.12.87) |
| International Searching Authority | Signature of Authorized Officer¹⁰ |
| Japanese Patent Office | |

Form PCT ISA/210 (second sheet) (October 1981)